Europäisches Patentamt

European Patent Office

Office européen des brevets

(19)

(11) Publication number : **0 509 849 A2**

## (12) EUROPEAN PATENT APPLICATION

(21) Application number : **92303545.5**

(22) Date of filing : **21.04.92**

(51) Int. Cl.⁵ : **G01N 21/41**

(30) Priority : **19.04.91 JP 115481/91**

(43) Date of publication of application :
**21.10.92 Bulletin 92/43**

(84) Designated Contracting States :
**CH DE FR GB LI**

(71) Applicant : **Kabushiki Kaisha TOPCON**
**75-1, Hasunuma-cho Itabashi-ku**
**Tokyo (JP)**

(72) Inventor : **Gisin, Nicolas**
**12, ch. Champendal 1206**
**Geneva (CH)**
Inventor : **Stamp, Patrick**
**20, rue J. Dalphin**
**CH-1227 Carouge (CH)**
Inventor : **Hori, Nobuo, c/o Kabushiki Kaisha**
**Topcon**
**75-1, Hasunuma-cho, Itabashi-ku**
**Tokyo-to (CH)**

(74) Representative : **Maggs, Michael Norman et al**
**Kilburn & Strode 30 John Street**
**London WC1N 2DD (GB)**

(54) Measuring the cross-sectional distribution of the refractive index of an optical waveguide.

(57)    A method of measuring the cross-sectional distribution of the refractive index of an optical waveguide (1) comprising a substrate portion (2) and a waveguide portion (3) includes moving a focussed beam of light over one end of the optical waveguide portion (3) and detecting the amount of light which leaks from the optical waveguide (1) and is incident on a light receiving unit (5), whereby the amount of light incident on the light receiving unit (5) as the focussed beam of light moves is representative of the cross-sectional distribution of the refractive index of the optical waveguide. The light receiving unit (5) is positioned either adjacent the prism (11,14), whose refractive index is close to that of the optical waveguide portion (3) and is placed against the optical waveguide portion (3) or directly against the substrate portion or against a prism (14) whose refractive index is close to that of the substrate portion (2) and is placed against the substrate portion.

FIG.1

EP 0 509 849 A2

The present invention relates to a method of measuring the cross-sectional distribution of the refractive index of an optical waveguide for use in e.g. optical communications.

One method of measuring the cross-sectional distribution of the refractive index of an optical waveguide is the so-called refracted near field method (RNF method). The RNF method is non-destructive and provides a high measurement accuracy and a high resolution and is considered to be an excellent method of measuring the cross-sectional distribution of the refractive index of an optical waveguide.

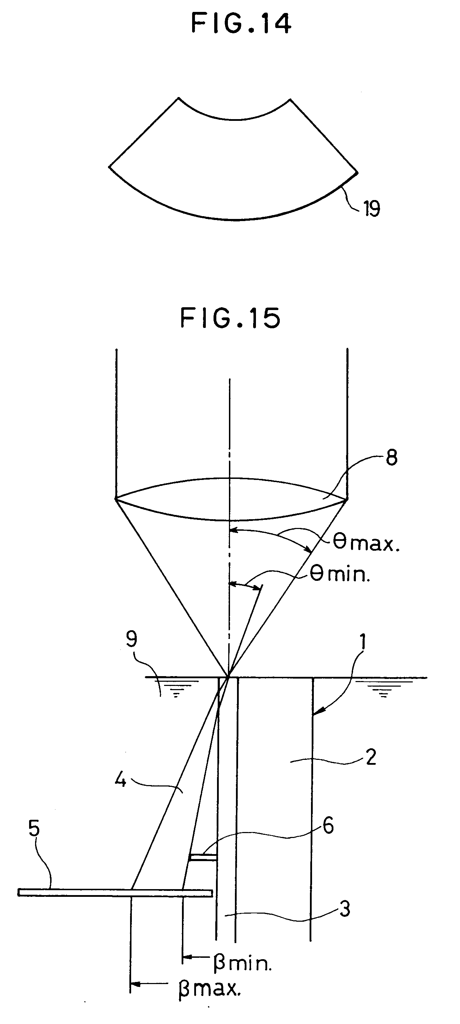

The general principle of the RNF method is illustrated schematically in Figure 15 of the accompanying drawings. An optical waveguide substrate 1 comprising an optical waveguide portion 3 on one side of a substrate portion 2 is immersed in a liquid 9 having refractive index of $n_L$, which is close to the refractive index $n(r)$ of the optical waveguide portion 3. A laser beam is focussed by an objective lens 8 onto the end surface of the optical waveguide portion 3 at a maximum angle of incidence $\theta$, and the light leaking out of the optical waveguide portion 3 is detected and the refractive index of the optical waveguide portion 3 is measured.

If the refractive index of the optical waveguide portion 3 at the point where the laser beam enters it is $n(r)$ and if the refractive index of the air or the liquid on the incident side of the optical waveguide portion 3 is no, the exit angle $\beta$ of the laser beam relative to the incident angle $\theta$ is given simply by the following equation (1) in accordance with Snell's law:

$$n^2(r) = n_o^2 \sin^2 \theta + n_L^2 \cos^2 \beta \quad (1)$$

Therefore, when the point of incidence of the laser beam is scanned across the thickness of the optical waveguide portion 3 or in the direction perpendicular thereto, the exit angle $\beta$ changes according to the refractive index $n(r)$ at each point. Specifically, the exit angle $\beta$ decreases at those points having a higher refractive index and increases at those points having a lower refractive index.

Accordingly, by measuring the parameters of the leaking light, the refractive index $n(r)$ of the optical waveguide portion 3 can be obtained.

Apparatus for measuring the cross-sectional distribution of the refractive index of an optical waveguide utilising the RNF method is based on the above principle.

Referring again to Figure 15, a detector 5 for receiving the light 4 leaking out of the optical waveguide portion 3 is provided beside, i.e. laterally adjacent, the optical waveguide portion 3. Also, a shield plate 6 comprising a semi-circular disk is provided for shielding that portion of the leaking light 4 closest to the optical waveguide portion 3. The detector 5 receives the leaking light 4 in a semi-annular shape, i.e. that portion of the light which is closest to the optical waveguide portion 3 is not received. The amount of light received is given by the following equation (2), in which the maximum angle of the incident light to the optical axis at the light receiving point, i.e. the focal point of the lens 8, is $\theta_{max}$ and the angle corresponding to that at which the incident light just passes the shield plate 6 is $\theta_{min}$.

$$P = \int_{\cos\theta_{max}}^{\cos\theta_{min}} I(\theta) \cdot d(\cos\ \theta) \quad (2)$$

In the above equation, $I(\theta)$ represents the intensity distribution of the incident light based on the angle of incidence. By making the light receiving surface of the detector 5 sufficiently large, all the leaking light 4 is received by the light receiving surface. Therefore, $\theta_{max}$ in the above equation (2) is determined by the numerical aperture (NA) and is given by the following equation (3):

$$n_o \sin\theta_{max} = NA \quad (3)$$

The maximum exit angle $\beta_{max}$ of the leaking light changes in accordance with the refracting power of the optical waveguide portion 3, that is to say, as the point of incidence of the light on the detector 5 on the outermost side is moved, and is primarily determined by the point where the light enters the optical waveguide portion 3. However, the angle $\beta_{min}$ is determined by the position of the edge of the said shield plate and is not influenced by the refractive index of the optical waveguide portion 3.

Furthermore, the angle of incidence $\theta_{min}$ corresponding to the minimum exit angle $\beta_{min}$ is given by the following equation (4), which is a variant of equation (1).

$$n_o^2 \sin^2\theta_{min} = n^2(r) - n_L^2 \cos^2\beta_{min} \quad (4)$$

The angle of incidence $\theta_{min}$ is an important factor for determining the refractive index of the optical waveguide portion 3. Specifically, the value for the amount of light obtained by the above equation (2) changes in accordance with the refractive index.

If it is supposed that the quantity of light received at an arbitrary point in the direction of the thickness of the optical waveguide portion 3 or the direction perpendicular thereto is $P(n(r))$, the value of $P(n(r))$ is given by the following equation (5):

$$P(n(r)) = \int_{\cos\theta_{max}}^{\cos\theta_{min}(n(r))} I(\theta) \cdot d(\cos\theta) \qquad (5)$$

If the angular dependency $I(\theta)$ of the incident light intensity has a Lambert distribution [$I(\theta) = I_o \cos\theta$], equation (6) below is obtained from equation (5), and a correction factor $\Delta n\ (r)$ can be obtained when the laser spot position is scanned in the direction of the thickness of the optical waveguide portion, or the direction perpendicular thereto and the change of light quantity $\Delta P$ is measured.

$$\Delta P = a \cdot \Delta n(r) \qquad (6)$$

The proportional constant a is determined by the refractive index $n_L$, which is already known.

Normally, a laser beam is used as the light source. In this case, the incident light intensity distribution $I(\theta)$ is a Gaussian distribution rather than a Lambert distribution, and the change in the light quantity and the change of refractive index are not as simple as in equation (6). The correction factor $\Delta n\ (r)$ can, however, be obtained by calculation.

In a conventional apparatus for measuring the cross-sectional distribution of refractive index of an optical waveguide, the optical waveguide substrate is immersed in a liquid which has a refractive index close to, or more preferably higher than, that of the optical waveguide portion in order to prevent total reflection of light within the optical waveguide portion and to radiate the light entering the optical waveguide portion to outside the optical waveguide portion. For this reason, the conventional apparatus requires an immersion liquid.

If the material of the optical waveguide portion is glass, the refractive index is about 1.5, and it is relatively easy to select a liquid for immersion. However, if the optical waveguide portion is formed by thermal diffusion of Ti on a single crystal substrate of $LiNbO_3$ or $LiTaO_3$, the refractive power of the substrate is 2.0 or more in many cases.

For such an optical waveguide substrate, an immersion liquid having a similar refractive index is needed, but liquids having a refractive index of 2.0 or more are injurious to human health. Even if the refractive index is low, there may be no immersion liquid suitable for the substrate, depending upon the material of the substrate. For this reason, it may be difficult and dangerous to perform the measurement or even impossible in some cases.

It is the object of the present invention to provide a method with which it is possible to measure the distribution of the refractive index of an optical waveguide without an immersion liquid.

According to the present invention a method of measuring the cross-sectional distribution of refractive index of an optical waveguide comprising a substrate portion and an optical waveguide portion, the method including moving a focused beam of light over one end of the optical waveguide portion and detecting the amount of light which leaks from the optical waveguide portion and is incident on a light receiving unit, whereby the amount of light incident on the light receiving unit as the focused beam of light moves is representative of the cross-sectional distribution of the refractive index of the optical waveguide, is characterised by placing a prism whose refractive index is substantially equal to or greater than that of the optical waveguide portion against the optical waveguide portion and placing the light receiving unit adjacent the face of the prism through which light leaking from the optical waveguide portion into the prism leaves the prism. Thus in this embodiment of the invention the previously used immersion liquid is replaced by a prism which is positioned against the optical waveguide portion. However, if the refractive index of the substrate portion is appropriate then the prism may be omitted and the light leaking from the substrate portion may be used to effect the measurement and in this further embodiment of the invention the light receiving unit is placed against the substrate portion of the optical waveguide.

According to a second aspect, there is provided a method of measuring the cross-sectional distribution of the refractive index of an optical waveguide comprising a substrate portion and an optical waveguide portion, the method including moving a focussed beam of light over one end of the optical waveguide portion and detecting the amount of light which leaks from the optical waveguide and is incident on a light measuring unit, whereby the amount of light incident on the light receiving unit as the focussed beam of light moves is representative of the cross-sectional distribution of the refractive index of the optical waveguide, characterised by placing the light receiving unit adjacent the surface of the substrate portion remote from the waveguide portion.

According to a third aspect, there is provided a method of measuring the cross-sectional distribution of the refractive index of an optical waveguide comprising a substrate portion and an optical waveguide portion, the method including moving a focussed beam of light over one end of the optical waveguide portion and detecting the amount of light which leaks from the optical waveguide and is incident on a light measuring unit, whereby the amount of light incident on the light receiving unit as the focussed beam of light moves is representative of the cross-sectional distribution of the refractive index of the optical waveguide, characterised by placing a prism whose refractive index is substantially equal to or greater than that of the substrate portion, against the substrate portion and placing the light receiving unit adjacent that face of the prism through which light leaking from the substrate portion into the prism leaves the prism.

According to a further aspect the invention comprises an apparatus for measuring cross-sectional distribution of refractive index of an optical waveguide by RNF method, comprising a projection system for irradiating luminous flux for measurement from one end surface to the optical waveguide portion arranged one side of a substrate portion, a prism member having refractive index closer to that of the substrate portion and placed in close contact with the surface of the optical waveguide portion, and a light receiving unit arranged to receive the light leaking from the optical waveguide portion and passing through the prism member, whereby cross-sectional distribution of refractive index of the optical waveguide is measured by change of light quantity entering the light receiving unit in case an incident point of the luminous flux for measurement is moved.

The invention also extends to an apparatus for measuring cross-sectional distribution of refractive index of an optical waveguide by RNF method, comprising a projection system for irradiating luminous flux for measurement from one end surface to the optical waveguide portion arranged on one side of a substrate portion, and a light receiving unit placed closer to the surface of the substrate portion on the side opposite to the optical waveguide portion and receiving the light leaking from the waveguide among luminous fluxes for measurement, whereby cross-sectional distribution of refractive index of the optical waveguide is measured by change of light quantity entering the light receiving unit in case an incident point of the luminous flux for measurement is moved.

The invention also extends to an apparatus for measuring cross-sectional distribution of refractive index of an optical waveguide by RNF method, comprising a projecting system for irradiating luminous flux for measurement to one end surface to the optical waveguide portion arranged on one side of a substrate portion, a prism member having refractive index closer to that of the substrate portion and placed in close contact with the surface of the substrate portion opposite to the optical waveguide portion, and a light receiving unit arranged to receive the light leaking from the optical waveguide portion and passing through the prism member, whereby cross-sectional distribution of refractive index of the optical waveguide is measured by change of light quantity entering the light receiving unit in case an incident point of the luminous flux for measurement is moved.

In a further embodiment of the invention it is again the light leaking from the substrate portion which is used to effect the measurement but the method also includes placing a prism, whose refractive index is substantially equal to or greater than that of the substrate portion, against the substrate portion and the light receiving unit is positioned to receive the light which leaked from the substrate portion into the prism as it leaves the prism.

The invention relates both to a method and to an apparatus.

Further features and details of the invention will be apparent from the following description of certain specific embodiments which is given by way of example with reference to Figures 1 to 14 of the accompanying drawings, in which:

Figure 1 shows the basic configuration of one embodiment of the invention;

Figure 2 illustrates the shape of a detector in the first embodiment;

Figure 3 is a drawing for explaining the transmission of light between the optical waveguide substrate and prism;

Figure 4 is a diagram showing the relationship between the gap in terms of the laser wavelength $\lambda$ between the optical waveguide portion and prism and the refractive index of the medium in the gap or the transmission efficiency;

Figures 5 to 12 are views showing part of second to ninth embodiments of the invention, respectively;

Figure 13 shows the relationship between light and a diffraction grating at the boundary surface; and

Figure 14 shows an example of the shape of a holographic lens to be used in the invention.

Those components which are the same or similar to components illustrated in Figure 15 are designated with the same reference numerals.

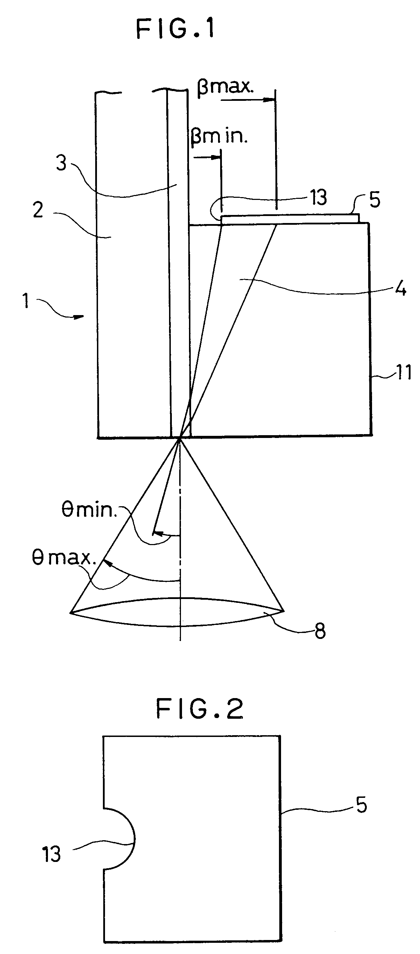

Referring to Figures 1 and 2, a cube prism 11 having approximately the same refractive index as that of the optical waveguide portion 3 is mechanically fixed to the waveguide portion 3 and a detector 5 is attached to the surface of the prism 11 remote from the objective lens 8. The detector 5 has a semi-circular cut-out portion 12 centred on the optical axis and situated on that side which is closest to the optical axis, as shown in Figure 2, whereby the edge 13 of the cut-out portion 12 defines the minimum exit angle $\beta_{min}$ of the leaking light 4.

The refractive index of the prism 11 corresponds to $n_L$ of equation (1), and the basic equation of the RNF method is applicable.

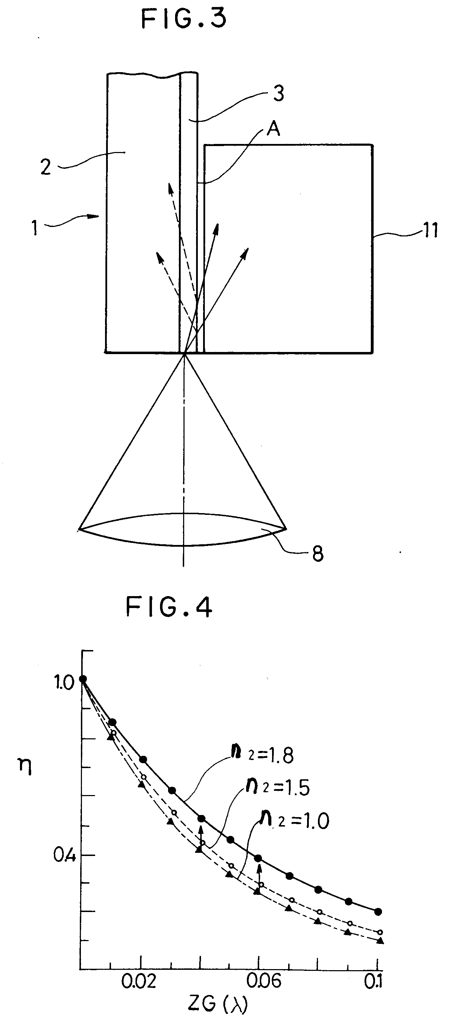

As shown in Figure 3, by bringing the prism 11 closer to the optical waveguide portion 3, light can be transmitted through the cube prism 11 by utilizing evanescent waves occurring in total reflection at the surface A opposed to prism 11 of the optical waveguide portion 3. The transmission efficiency $\eta$ is determined by the gap size $Z_G$ and is also influenced by the refractive index $n_2$ of the medium which fills the gap.

The relationship between the transmission efficiency $\eta$ and the gap width $Z_G$ or refractive index $n_2$ of the medium is shown in Figure 4. As is evident from Figure 4, the smaller the gap $Z_G$, or the higher the refractive index $n_2$ of the medium, the more the evanescent area extends outwardly from the surface A. Thus, the transmission efficiency to the prism is increased.

Further, as is evident from Figure 4, sufficient leaking light for the measurement to be performed can be received even when the gap $Z_G$ is not 0. This reveals that measurements can be made when there is mechanical contact but smaller gaps may be present on a micro scale.

By mechanically attaching the prism 11 in close contact with the optical waveguide portion 3, the amount of leaking light 4 and thus the refractive index of the optical waveguide portion 3 can be measured.

As described above, there is no need to provide a shield plate 6, as described in the conventional example, because the portion of the detector closer to the centre is notched or cut-out in a semi-circular shape and the edge of the recess defines the exit angle $\beta_{min}$ of the leaking light. When the incident point of the laser beam is scanned in the direction of the thickness of the optical waveguide portion 3, or the direction perpendicular thereto, a computing element (not shown) calculates the distribution of the refractive index according to equations (5) and (6) based on signals from the detector 5.

Various shapes of the detector are possible. It may be in rectangular form, and the edge closest to the optical axis can be spaced from the optical waveguide portion 3.

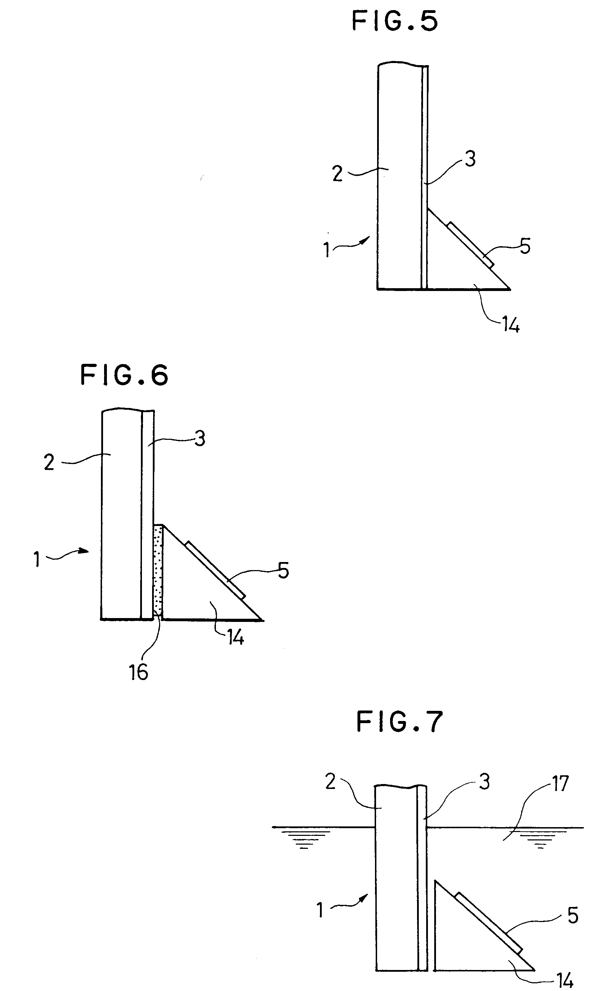

In the embodiment of Figure 5, a triangular prism 14 is provided in close contact with the optical waveguide portion 3 and the detector 5 is attached to the inclined surface 15 of the prism 14.

By changing the prism to a triangular prism 14, even if the incident angle of the leaking light entering the detector is close to or higher than the critical angle, the incident angle of the leaking light is lower than the critical angle. This makes it possible to receive the leaking light effectively and to perform the measurement.

As described above, the transmission efficiency $\eta$ can be increased by introducing a medium with a higher refractive index into the gap between the prism and the optical waveguide portion. In the embodiment of Figure 6, a liquid film 16 is placed between the prism 14 and the optical waveguide portion 3. The presence of this liquid film 16 makes it possible to increase the transmission efficiency and to perform the measurement even when the contact surface of the optical waveguide is relatively rough.

For the same reason, the prism 14 may be immersed in a liquid medium 17, as shown in Figure 7.

Needless to say, the loss of light intensity due to Fresnel reflection at the boundary surface can be reduced by replacing the liquid medium 17 with air even when the refractive index of the liquid film 16 and the liquid medium 17 is somewhat lower than the refractive index of the optical waveguide unit 3 and the prism 14 or even when the contact is not sufficiently close and a gap is present. Particularly, effective results can be obtained if the optical waveguide portion 3 and prism 14 are made of materials having a refractive index of 2.0 or more.

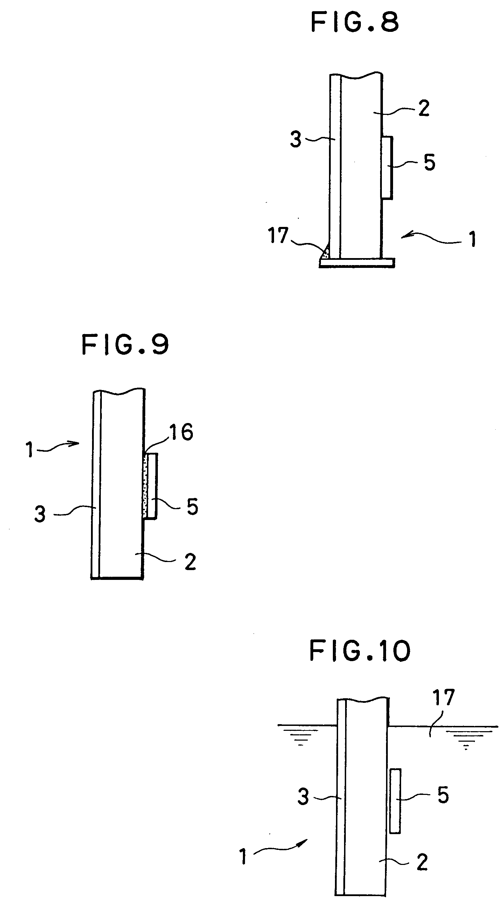

In the above embodiment, solid prisms 11 and 14 are used having the refractive index $n_L$ in the equation (1), but the substrate portion 2 can also be used instead of the solid prisms 11 and 12. In this case, the detector 5 may be attached to the surface opposite to that where the optical waveguide portion 3 is provided, as shown in Figure 8.

In this case, the refractive index $n_L$ in the equation (1) is equal to the refractive index $n_s$ of the substrate portion 2. If $n_L = n_s$, the proportional constant a in equation (6) cannot be obtained. Thus, the reference liquid 17 having a known refractive index $n_r$ close to the refractive index $n_s$ of the substrate is used in a small quantity.

The closer $n_r$ is to $n_s$, the higher is the accuracy for determining the proportional constant and the greater is the reliability of the absolute value of the refractive index distribution n(r) of the optical waveguide.

There is no need always to use this reference liquid when measuring the refractive index distribution of the optical waveguide. It can be used only for the calibration of the constant.

Figure 9 shows an embodiment in which a liquid film 16 is placed between the substrate portion 2 and the detector 5 in order to decrease the loss of light due to Fresnel reflection, and Figure 10 shows an embodiment with the detector 5 immersed in a liquid medium 17.

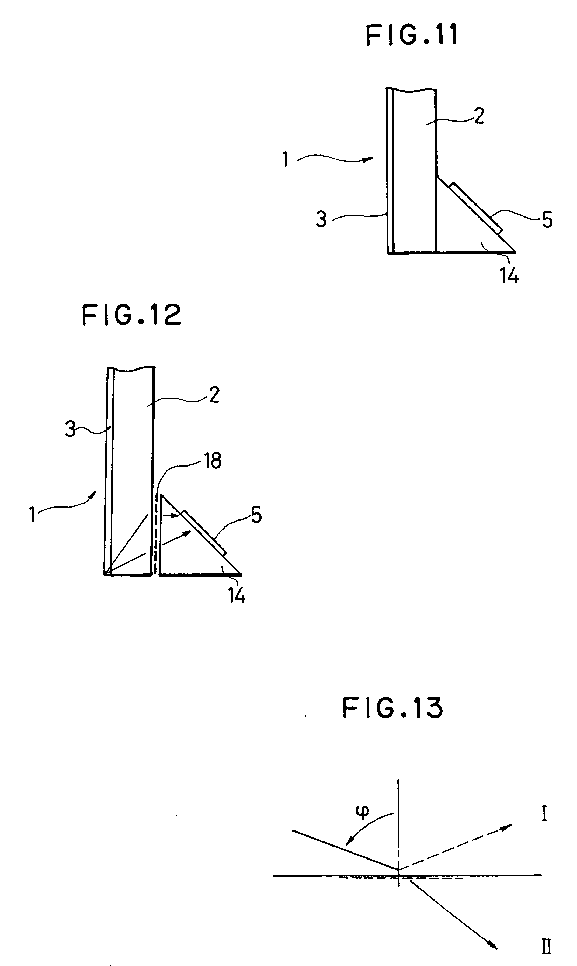

Figure 11 shows an embodiment in which the substrate has a higher refractive index. In this embodiment, the light which is to be measured leaks through a triangular prism 14 whose refractive power is close to the refractive index of the substrate portion 2, by utilising evanescent waves. A triangular prism 14 is used in this embodiment in order to ensure that the incident angle of the light leaking to the detector 5 is lower than the critical angle.

Needless to say, the transmission efficiency can be increased by placing a liquid film 16 between the substrate 2 and the triangular prism 14 or by immersion into a liquid medium.

In the embodiment of Figure 12, the transmission efficiency is further increased and this is based on the principle which will be described with reference to Figure 13. As shown in Figure 13, even if the light in a medium I impinges on a medium II at an angle ø exceeding the critical angle causing total reflection, light is radiated into medium II at the diffraction angle matching the pitch of the diffraction grating, if a diffraction grating is provided on the boundary surface. This is a so-called grating coupler.

In the embodiment shown in Figure 12, a white and black grating pattern is printed onto a thin film 18 to form a hologram of amplitude-transmitting type or a hologram of phase type, and this film 18 is brought into close contact with and between the substrate 2 and the prism 14. Alternatively, a hologram may be formed directly on the surface of the triangular prism 14. Furthermore, by forming this grating pattern into a curve, a so-called holographic lens is obtained. This makes it possible to converge the luminous flux to be measured and to obtain a high efficiency even if the detector 5 is small. In this case, the diffraction grating can be given the role of a spatial filter by forming the holographic lens 19 in the shape shown in Figure 14 instead of forming a cut-out portion in the detector. Needless to say, the transmission efficiency can again be increased by immersion into the liquid medium 17.

## Claims

1. A method of measuring the cross-sectional distribution of the refractive index of an optical waveguide comprising a substrate portion and an optical waveguide portion, the method including moving a focussed beam of light over one end of the optical waveguide portion and detecting the amount of light which leaks from the optical waveguide portion and is incident on a light receiving unit, whereby the amount of light incident on the light receiving unit as the focussed beam of light moves is representative of the cross-sectional distribution of the refractive index of the optical waveguide, characterised by placing a prism (11, 14), whose refractive index is close to that of the optical waveguide portion (3), against the optical waveguide portion (3) and placing the light receiving unit (5) adjacent that face of the prism (11, 14) through which light leaking from the optical waveguide portion (3) into the prism (11, 14) leaves the prism (11, 14).

2. A method of measuring the cross-sectional distribution of the refractive index of an optical waveguide comprising a substrate portion and an optical waveguide portion, the method including moving a focussed beam of light over one end of the optical waveguide portion and detecting the amount of light which leaks from the optical waveguide and is incident on a light measuring unit, whereby the amount of light incident on the light receiving unit as the focussed beam of light moves is representative of the cross-sectional distribution of the refractive index of the optical waveguide, characterised by placing the light receiving unit (5) adjacent the surface of the substrate portion (2) remote from the waveguide portion (3).

3. A method of measuring the cross-sectional distribution of the refractive index of an optical waveguide comprising a substrate portion and an optical waveguide portion, the method including moving a focussed beam of light over one end of the optical waveguide portion and detecting the amount of light which leaks from the optical waveguide and is incident on a light measuring unit, whereby the amount of light incident on the light receiving unit as the focussed beam of light moves is representative of the cross-sectional distribution of the refractive index of the optical waveguide, characterised by placing a prism (14), whose refractive index is close to that of the substrate portion (2), against the substrate portion (2) and placing the light receiving unit (5) adjacent that face of the prism (14) through which light leaking from the substrate portion (2) into the prism (14) leaves the prism (14).

4. A method as claimed in claim 1 or 3, characterised by placing a hologram film (18) between the opposed surfaces of the prism (11,14) and the optical waveguide (1).

5. A method as claimed in claim 1 or 3, characterised in that the prism (14) is a triangular prism.

6. A method as claimed in any one of the preceding claims, characterised by introducing a liquid film (16) in the interface between the opposing surfaces of the optical waveguide (1) and the prism (11,14) or the light receiving unit.

7. A method as claimed in claim 6, characterised by immersing the interface in a liquid medium (17).

# FIG.1

# FIG.2

# FIG.3

# FIG.4

8

# FIG.5

# FIG.6

# FIG.7

# FIG.8

# FIG.9

# FIG.10

## FIG.11

## FIG.12

## FIG.13

11

# FIG.14

# FIG.15